# EUROPÄISCHE PATENTSCHRIFT

(11) **EP 1 989 667 B1**
(45) Veröffentlichungstag und Bekanntmachung des Hinweises auf die Patenterteilung: **04.01.2012**
(21) Anmeldenummer: 07846790.9
(22) Anmeldetag: 23.11.2007
(51) Int. Cl.: G06K 19/077

(54) **VERFAHREN UND HALBZEUG ZUR HERSTELLUNG EINES INLAYS**
METHOD AND SEMI-FINISHED PRODUCT FOR THE PRODUCTION OF AN INLAY
PROCÉDÉ ET DEMI-PRODUIT PERMETTANT LA PRODUCTION D'UN INLAY

(30) Priorität: 19.02.2007 DE 102007008487
(43) Veröffentlichungstag der Anmeldung: 12.11.2008
(73) Patentinhaber: Smartrac IP B.V., 1077 XX Amsterdam (NL)
(72) Erfinder: RIETZLER, Manfred, 87616 Marktoberdorf (DE)
(74) Vertreter: Tappe, Hartmut
(86) Internationale Anmeldenummer: PCT/EP2007/010190
(87) Internationale Veröffentlichungsnummer: WO 2008/101529

(56) Entgegenhaltungen:
- EP-A- 0 587 011
- EP-A- 1 244 055
- US-A- 5 612 513
- US-A- 5 849 230

## Beschreibung

Die Erfindung ein Verfahren und ein Halbzeug zur Herstellung eines Inlays, insbesondere für Chipkarten, Wertkarten, Identifikationsdokumente oder dergleichen, mit zumindest zwei elektronischen Bauelementen, wobei alle elektronischen Bauelemente in einer Relativanordnung auf einem Trägersubstrat zur Ausbildung einer Bauelementanordnung angeordnet werden, und wobei die Bauelementanordnung auf einer ersten Decklage angeordnet wird und eine Abstandslage mit einer Durchgangsöffnung auf der ersten Decklage aufgebracht wird, wobei die Bauelementanordnung von der Durchgangsöffnung aufgenommen wird, ein die Durchgangsöffnung zumindest ausfüllendes Füllmaterial in diese eingebracht wird, eine zweite Decklage auf die Abstandslage aufgebracht wird und das Füllmaterial unter Ausbildung einer Druckkraft auf die Decklagen verfestigt wird. Weiter betrifft die Erfindung ein Verfahren zur Herstellung einer Karte mit einem Halbzeug sowie eine Karte umfassend ein derartiges Halbzeug.

Verfahren und Halbzeuge zur Herstellung eines Inlays der eingangs genannten Art sind hinlänglich bekannt und werden regelmäßig zur Herstellung eines Vorproduktes von Chipkarten, Bankkarten, Zugangskontrollkarten, Passdokumenten oder dergleichen eingesetzt. Die Herstellung derartiger Inlays bzw. Karten erfolgt in der Regel durch Heißlamination, d.h., verschiedene Kunststofflagen werden unter zwischen liegender Anordnung elektronischer Bauteile verpresst und unter relativ hoher Temperatur miteinander verbunden. Die Heißlamination wird oftmals sowohl zur Herstellung eines Inlays als auch zur Herstellung einer Karte angewendet. Bei der Integration mehrerer elektronischer Bauteile in ein Inlay bzw. eine Karte, wie z.B. Displays, LEDs, Miniaturlautsprecher, Batterien usw., erweist sich die Heißlaminationstechnik als nachteilig. Die eingebauten Komponenten sind zum Teil temperaturempfindlich und nicht resistent gegenüber den typischen Heißlaminationstemperaturen, die bis zu 150° C betragen können. Auch können die elektronischen Bauteile eine komplexe Geometrie aufweisen, so dass es schwierig ist, diese Bauteile in einen Lagenverbund mit zur Aufnahme der Bauteile gestanzten Fenstern einzupassen.

Herstellungsverfahren, die die vorgenannten Nachteile vermeiden, sind die so genannte "Kaltlamination", bei der elektronische Bauteile zwischen zwei Lagen mit einem kaltaushärtenden Füllmaterial vergossen werden, und die so genannte "warme Lamination", bei der Klebermaterial zwischen Lagen bei vergleichsweise niedrigen Temperaturen zur Aushärtung gebracht wird.

So sind aus dem Stand der Technik eine Reihe von Herstellungsvarianten dieser Verfahren zur Herstellung eines Inlays bzw. einer Karte bekannt. Bei den bekannten Verfahren wird beispielsweise auf eine Lage einer Karte eine zweite Positionierlage als Positionierhilfe aufgelegt, wobei diese zweite Lage Ausnehmungen aufweist, die den geometrischen Formen einzulegender elektronischer Bauteile entsprechen. Nach einem Verguss der Bauteile und der zweiten Lage mit einem Füllmaterial wird vor Aushärtung des Füllmaterials eine dritte Lage in einem definierten Abstand, der die Dicke der Karte bestimmt, aufgebracht. Die Positionierlage kann unter anderem aus einem porösen Material bestehen, so dass das Füllmaterial in die Positionierlage eindringt. Auch kann die Positionierlage im Wesentlichen vollständig von Füllmaterial umgeben sein und ein die Karte stabilisierendes Element bilden. Kennzeichnend für diese aus dem Stand der Technik bekannten Verfahren ist, dass die Positionierlage mit dem zwischenliegenden Füllmaterial und den Bauteilen unter Druck verpresst wird. Unter Umständen wird hierbei auf die elektronischen Bauelemente eine die Bauelemente beschädigende Druckkraft ausgeübt. Auch ist bei derartigen Verfahren eine genaue Position aller Bauelemente innerhalb einer aus Füllmaterial ausgebildeten Mittenlage nur schwer bestimmbar. Durch das Aufbringen von Füllmaterial bzw. das Verpressen können die Bauteile sowohl in horizontaler als auch in vertikaler Richtung in unerwünschter Weise verschoben werden. Insbesondere bei der gleichzeitigen Verwendung von elektronischen Bauteilen mit unterschiedlichen geometrischen Formen, wie z.B. eine Spulenantenne oder ein Display, ist dies besonders wahrscheinlich und unerwünscht.

Die US 5,849,230 A beschreibt ein Verfahren zur Herstellung eines Inlays mit zumindest zwei elektronischen Bauelementen, wobei alle elektronischen Bauelemente in einer Relativanordnung in einem Trägersubstrat zur Ausbildung einer Bauelementanordnung angeordnet werden, und wobei die Bauelementanordnung auf einer ersten Decklage angeordnet wird, wobei eine Abstandslage mit einer Durchgangsöffnung die erste Decklage umgibt, wobei die Bauelementanordnung von der Durchgangsöffnung aufgenommen wird, ein die Durchgangsöffnung zumindest ausfüllendes Füllmaterial in diese eingebracht wird, eine zweite Decklage in die Durchgangsöffnung auf das Füllmaterial aufgebracht wird und das Füllmaterial unter Ausbildung einer Druckkraft auf die Decklagen verfestigt wird. Die Bauelemente werden hier direkt auf einer Lage angeordnet, welche als Decklage funktioniert. Des Weiteren müssen die Bauelemente aufwendig vergossen werden.

Die EP 1 244 055 A2 beschreibt ein Verfahren zur Herstellung einer Bauelementanordnung mit zumindest zwei elektronischen Bauelementen, wobei alle elektronischen Bauelemente in einer Relativanordnung auf einem Trägersubstrat zur Ausbildung einer Bauelementanordnung angeordnet werden. Weiter wird auf dem Trägersubstrat eine Abstandslage angeordnet, deren Öffnung nachfolgend mit einem Füllmaterial verfüllt wird. Auch hier werden die Bauelemente direkt auf einer Decklage angeordnet.

Die US 5,612,513 A und die EP 0 587 011 A1 beschreiben jeweils Anordnungen, bei denen die Bauelemente ebenfalls direkt auf einer Lage angeordnet werden, welche als Decklage funktioniert.

Der vorliegenden Erfindung liegt daher die Aufgabe zugrunde, ein einfaches und kostengünstiges Verfahren bzw. Halbzeug zur Herstellung eines Inlays für eine Chipkarte vorzuschlagen, das eine Zerstörung elektronischer Bauelemente durch hohe Temperaturen und Druckkräfte vermeidet, die gleichzeitige Verwendung von elektronischen Bauelementen mit unterschiedlichen geometrischen Formen ermöglicht und eine definierte Relativanordnung aller Bauelemente in einem Kartenkörper sicherstellt.

Diese Aufgabe wird durch Verfahren zur Herstellung eines Inlays mit den Merkmalen der Ansprüche 1 oder 2, ein Halbzeug mit den Merkmalen des Anspruchs 13 sowie ein Verfahren zur Herstellung einer Karte mit den Merkmalen des Anspruchs 18 und einer Karte mit den Merkmalen des Anspruchs 21 gelöst.

Bei dem ersten erfindungsgemäßen Verfahren zur Herstellung eines Inlays mit zumindest zwei elektronischen Bauelementen werden alle elektronischen Bauelemente in einer Relativanordnung auf einem Trägersubstrat zur Ausbildung einer Bauelementanordnung angeordnet, und die Bauelementanordnung wird auf einer ersten Decklage angeordnet. Nachfolgend wird eine Abstandslage mit einer Durchgangsöffnung auf der ersten Decklage aufgebracht, wobei die Bauelementanordnung von der Durchgangsöffnung aufgenommen wird, ein die Durchgangsöffnung zumindest ausfüllendes Füllmaterial in diese eingebracht wird, eine zweite Decklage auf die Abstandslage aufgebracht wird und das Füllmaterial unter Ausbildung einer Druckkraft auf die Decklagen verfestigt wird.

Bei dem zweiten erfindungsgemäßen Verfahren zur Herstellung eines Inlays mit zumindest zwei elektronischen Bauelementen werden alle elektronischen Bauelemente in einer Relativanordnung auf einem Trägersubstrat zur Ausbildung einer Bauelementanordnung angeordnet. Auf eine erste Decklage wird eine Abstandslage mit einer Durchgangsöffnung aufgebracht, und nachfolgend wird eine Bauelementanordnung auf der ersten Decklage angeordnet, wobei die Bauelementanordnung von der Durchgangsöffnung aufgenommen wird, ein die Durchgangsöffnung zumindest ausfüllendes Füllmaterial in diese eingebracht wird, eine zweite Decklage auf die Abstandslage aufgebracht wird und das Füllmaterial unter Ausbildung einer Druckkraft auf die Decklagen verfestigt wird.

Bei beiden Verfahren kommt in vorteilhafter Weise eine Abstandslage zum Einsatz, wobei die Abstandslage den Abstand beider Decklagen und somit die Dicke des Karteninlays definiert. Wird während des nachfolgenden Aushärtens des Füllmaterials auf die Decklagen eine Druckkraft ausgeübt, kann die Druckkraft im Wesentlichen von der Decklage aufgenommen werden, ohne dass Bauelemente eine Druckkraft erfahren. So können auch Bauelemente unterschiedlicher Größe, insbesondere Höhe, in die Durchgangsöffnung der Abstandslage eingebracht werden, wobei die Höhe der Bauelemente jedoch nie die Dicke der Abstandslage überschreitet. Weiter ist durch die Anordnung aller elektronischen Bauteile auf einem Trägersubstrat sichergestellt, dass weder durch das Einfüllen des Füllmaterials, noch durch das Ausüben der Druckkraft eine Verschiebung der Bauelemente aus ihrer definierten Relativposition erfolgt. So ist beispielsweise die Höhe eines Displays bzw. dessen Relativposition zu einem Tastenelement einfach definierbar. Auch wird das Verfahren insgesamt vereinfacht, da alle Bauelemente in einem einzigen Verfahrensschritt auf der ersten Decklage angeordnet werden. Die elektrischen Verbindungsleitungen der Bauelemente untereinander werden ebenso durch das Einfüllen des Füllmaterials bzw. das Ausüben der Druckkraft nicht verändert bzw. geschädigt, so dass bereits vor Anordnung der Bauelementanordnung auf der ersten Decklage eine Funktionsüberprüfung der Bauelementanordnung möglich ist.

In einer Ausführungsform des Verfahrens kann vor Anordnung der Bauelementanordnung auf der ersten Decklage eine erste Menge Füllmaterial in die Durchgangsöffnung eingebracht werden, die elektronischen Bauelemente können in einer Relativanordnung im Füllmaterial angeordnet werden, und das Füllmaterial kann zu einem Trägersubstrat verfestigt werden. So ist einerseits sichergestellt, dass alle Bauelemente vollständig von Füllmaterial umgeben sind, und andererseits, dass alle Bauelemente innerhalb einer definierten Relativposition im Füllmaterial dauerhaft positionierbar sind. Die nachfolgenden Verfahrensschritte können somit die Relativposition der Bauelemente nicht mehr beeinflussen. Auch kann durch unterschiedliche aufeinander folgende Gaben von Füllmaterial in die Durchgangsöffnung ein Trägersubstrat mit unterschiedlichen Positionierebenen für Bauelemente innerhalb eines Inlays ausgebildet werden.

Als besonders vorteilhaft erweist es sich, wenn die Verfestigung des Füllmaterials durch Temperaturbeaufschlagung erfolgt, wobei die Temperatur eine Bauelemente schädigende Temperatur nicht überschreitet. Neben der Verwendung von kalt aushärtenden Kunstharzen als Füllmaterial kann so ein Vergussmaterial als Füllmaterial verwendet werden, welches bei relativ geringer Temperatur, beispielsweise 80° C, aktiviert und ausgehärtet werden kann. So erfolgt keine Schädigung der Bauelemente durch eine relativ hohe Temperatur wie bei der Heißlamination, und die Aushärtung kann aufgrund der Temperaturaktivierung gegenüber kalt aushärtenden Kunstharzen vergleichsweise schnell erfolgen.

Wird die Bauelementanordnung auf der ersten Decklage fixiert, kann in vorteilhafter Weise ein Verrutschen bzw. eine Positionsänderung der Bauelementanordnung in Folge der Zuführung von Füllmaterial in die Durchgangsöffnung verhindert werden.

Eine Fixierung der Bauelementanordnung kann einfach auf der ersten Decklage vermittels einer Fixierschicht erfolgen, die zwischen einer Unterseite der Bauelementanordnung und der ersten Decklage ausgebildet wird. Eine derartige Fixierschicht kann beispielsweise ganz oder teilsweise auf der ersten Decklage oder der Bauelementanordnung aufgebracht sein und aus Klebermaterial oder einer Klebefolie bestehen.

In weiteren Ausführungsformen kann die Fixierung der Bauelementanordnung auf der ersten Decklage vermittels Ultraschall erfolgen. So kann einfach ohne die Verwendung zusätzlicher Materialien eine Verbindung zwischen Decklage und Bauelementanordnung hergestellt werden, ohne dass die Bauelementanordnung eine wesentliche Temperaturbeaufschlagung erfährt.

Die Fixierung der Bauelementanordnung auf der ersten Decklage kann auch vermittels eines thermischen Verfahrens erfolgen. So kann eine Fixierung durch ein thermisches Klebeverfahren oder durch ein Verfahren, welches eine Erweichung der Oberfläche der ersten Decklage und der Bauelementanordnung zur Folge hat, erfolgen. Wesentlich ist hier, dass das thermische Verfahren lokal angewandt wird, so dass keine unerwünschte Erwärmung der Bauelemente erfolgt.

Wenn zumindest ein Bauelement als Anzeigeelement ausgebildet ist, kann zwischen dem Anzeigeelement und der zweiten Decklage eine optische Übertragungsschicht angeordnet werden. Eine optische Übertragungsschicht ermöglicht eine gute Durchsichtigkeit der zweiten Decklage, da Luftzwischenräume zwischen Anzeigeelement und Decklage vermieden werden. Die optische Übertragungsschicht kann durch ein niedrigviskoses Klebermaterial gebildet werden, das vor dem Zusammenfügen einer Anzeigeelementfläche mit der zweiten Decklage dispensiert wird und eine optimale optische Übertragung durch die zweite Decklage gewährleistet.

Erfolgt eine feste Verbindung der Decklagen mit der Abstandslage, sind die Decklagen nicht mehr von der Abstandslage lösbar. Die feste Verbindung kann einfach infolge einer Verfestigung von Füllmaterial, welches sich zwischen Decklagen und Abstandslage befindet, ausgebildet werden oder durch eine Klebermaterialschicht, welche schon vor Einbringen des Füllmaterials im Kontaktbereich zwischen Abstandslage und Decklagen aufgebracht wird.

In einer weiteren vorteilhaften Ausführungsform des Verfahrens kann die erste und/oder die zweite Decklage vor oder nach dem Heraustrennen des Inlays aus einer die Decklagen und die Abstandslage aufweisenden Lagenanordnung von der Abstandslage bzw. dem verfestigten Füllmaterial entfernt werden. Dies kann einfach realisiert werden, indem für die Decklagen Materialien verwendet werden, die sich schlecht mit dem Füllmaterial verbinden, wie z.B. PET mit einer überaus glänzenden bzw. glatten Oberfläche. Die Ausbildung eines Inlays, welches lediglich eine Abstandslage aufweist, ist insbesondere dann besonders vorteilhaft, wenn das Inlay relativ dünn gestaltet werden soll oder wenn Decklagen im Gesamtkartenverbund störend sind.

Als besonders vorteilhaft erweist es sich, wenn das Inlay aus der Lagenanordnung herausgetrennt wird, derart, dass eine Trennlinie zwischen einer Innenkontur der Durchgangsöffnung und einer Außenkontur der Bauelementanordnung verläuft. So wird entsprechend dem Verlauf der Trennlinie die Abstandslage nicht mit herausgetrennt. Das zur Ausbildung einer Karte nutzbare Inlay verfügt somit nicht über eine Abstandslage bzw. Positionierlage. Die elektronischen Bauteile sind lediglich in einem Lagenverbund von Füllmaterial und zwei außen liegenden Decklagen aufgenommen. Durch die Verwendung der Abstandslage wird dennoch eine Positionierung der Bauelementanordnung innerhalb einer von der Trennlinie bestimmten Kontur eines Inlays in vorteilhafter Weise ermöglicht.

Bei dem erfindungsgemäßen Halbzeug zur Herstellung eines Inlays mit zumindest zwei elektronischen Bauelementen sind alle elektronischen Bauelemente in einer Relativanordnung auf einem Trägersubstrat zur Ausbildung einer Bauelementanordnung angeordnet, und die Bauelementanordnung ist von einer Durchgangsöffnung einer Abstandslage aufgenommen, wobei die Durchgangsöffnung mit einem verfestigten Füllmaterial ausgefüllt ist. So kann das Halbzeug besonders kostengünstig hergestellt werden, da alle elektronischen Bauteile in einem Arbeitsschritt in die Durchgangsöffnung einsetzbar sind. Auch kann so eine feste Verbindung zwischen Trägersubstrat und erster Decklage einfach hergestellt werden. Insbesondere kann sichergestellt werden, dass alle Bauelemente in der vorgesehenen Relativanordnung dauerhaft angeordnet sind, da diese selbst durch das Einfüllen des Füllmaterials nicht verändert wird.

Erfindungsgemäß wird auf einer ersten Decklage die Abstandslage mit der Durchgangsöffnung aufgebracht, wobei die Bauelementanordnung auf der ersten Decklage angeordnet ist. Das Halbzeug ist so besonders einfach herstellbar.

Wenn eine Trennlinie zwischen einer Innenkontur der Durchgangsöffnung und einer Außenkontur der Bauelementanordnung verläuft, kann ein Inlay aus dem Halbzeug herausgetrennt werden, das keine die Eigenschaften des Inlays beeinflussende Abstandslage bzw. Positionierlage aufweist.

In einer weiteren Ausführungsform kann auf einer der ersten Decklage zugewandten Kontaktseite des Trägersubstrats eine Oberflächenstruktur ausgebildet sein. Eine Oberflächenstruktur, beispielsweise in Form von Stegen, Wellen, Noppen usw., ermöglicht das Eindringen von Füllmaterial unterhalb des Trägersubstrats, d.h. in den Bereich zwischen Trägersubstrat und der ersten Decklage, so dass die Bildung von Lufteinschlüssen unterhalb des Trägersubstrats beim Verguss mit Füllmaterial vermieden wird.

Ist zumindest eine Decklage des Halbzeugs optisch transparent, kann ein als Anzeigeelement ausgebildetes elektronisches Bauelement betrachtet bzw. abgelesen werden. Wird beispielsweise ein Display als Anzeigeelement verwendet, ist es vorteilhaft, wenn alle das Display abdeckenden Lagen optisch transparent sind.

In einer besonders vorteilhaften Ausführungsform ist das Halbzeug aus einem Nutzenbogen gebildet, der zumindest jeweils eine weitere Bauelementanordnung, eine Durchgangsöffnung und ein verfestigtes Füllmaterial aufweist. Insgesamt können so eine Vielzahl von Inlays aus einem derartigen Halbzeug gewonnen und besonders ökonomisch hergestellt werden.

Bei dem erfindungsgemäßen Verfahren zur Herstellung einer Karte mit einem Halbzeug wird zumindest eine Außenlage vor oder nach einem Heraustrennen einer Karte bzw. eines Inlays aus einer Lagenanordnung mit dem Halbzeug bzw. dem Inlay vermittels einer Kleberverbindung verbunden, wobei die Karte bzw. das Inlay aus der Lagenanordnung herausgetrennt wird, derart, dass eine Trennlinie zwischen einer Innenkontur einer Durchgangsöffnung einer Abstandslage und einer Außenkontur einer in der Durchgangsöffnung angeordneten Bauelementanordnung verläuft. Durch die Verwendung eines Klebermaterials zur Verbindung des Halbzeugs mit einer Außenlage vor dem Heraustrennen der Karte oder nach dem Heraustrennen des Inlays mit einer Außenlage aus der Lagenanordnung ist die Anwendung eines Verbindungsverfahrens, welches die elektronischen Bauelemente durch zu hohe Temperaturen schädigen könnte, nicht notwendig.

Zur Ausbildung besonders dünner Karten oder Karten, bei denen die Decklagen störend sind, erweist es sich als besonders vorteilhaft, wenn die erste und/oder die zweite Decklage vor einem Aufbringen der Außenlage von der Abstandslage bzw. einem verfestigten Füllmaterial entfernt wird.

In einer vorteilhaften Ausführungsform des Verfahrens kann eine Aktivierung der Kleberverbindung durch Temperaturbeaufschlagung erfolgen, wobei die Temperatur eine Bauelemente schädigende Temperatur nicht überschreitet. Eine temperaturaktivierte Kleberverbindung ermöglicht eine schnelle und innige Ausbildung eines Lagenverbundes bei vergleichsweise niedrigen Temperaturen. Das Klebermaterial kann sowohl auf den Außenlagen als auch auf dem Halbzeug bzw. dem Inlay aufgebracht werden. Beispielsweise kann in einer besonderen Ausführungsform eine Lamination als so genannte warme Lamination mit abgesenkter Laminationstemperatur erfolgen. Die entsprechenden Laminierkleber können bereits bei relativ niedrigen Temperaturen aktiviert werden.

Weitere vorteilhafte Ausführungsformen des Verfahrens ergeben sich aus den Merkmalsbeschreibungen der auf den Vorrichtungsanspruch 13 rückbezogenen Unteransprüche.

Die erfindungsgemäße Karte weist eine das Halbzeug umfassende Lagenanordnung mit zumindest einer bedruckbaren Außenlage auf, wobei die Außenlage vor oder nach dem Aufbringen auf die Karte bedruckbar ist.

Weist die Karte ein Anzeigeelement auf, ist es besonders vorteilhaft, wenn die Außenlage zumindest in einem Teilbereich optisch transparent ist. So kann zum Beispiel ein Anzeigedisplay durch einen Bereich der Außenlage, welcher in etwa der Größe des Anzeigedisplays angepasst ist, zumindest bereichsweise sichtbar sein.

Eine Beschädigung einer Bedruckung ist in vorteilhafter Weise vermeidbar, wenn die Außenlage vollständig transparent ist und auf einer dem Füllmaterial zugewandten Seite bedruckt ist.

Weitere vorteilhafte Ausführungsformen einer Karte ergeben sich aus den Merkmalsbeschreibungen der auf den Vorrichtungsanspruch 13 rückbezogenen Unteransprüche.

Im Folgenden wird die Erfindung unter Bezugnahme auf die beigefügte Zeichnung näher erläutert.

Es zeigen:
- **Fig. 1**: eine erste Decklage mit einer Abstandslage in einer Schnittansicht nach einem ersten Verfahrensschritt;
- **Fig. 2a** bis **2d**: eine Bauelementanordnung in verschiedenen Ausführungsformen einer Anordnung der Bauelementanordnung auf der ersten Decklage in einer Schnittansicht entlang einer Linie II-II aus **Fig. 8** nach einem zweiten Verfahrensschritt;
- **Fig. 3**: in eine Durchgangsöffnung eingebrachtes Füllmaterial in einer Schnittansicht nach einem dritten Verfahrensschritt;
- **Fig. 4**: eine auf die Abstandslage aufgebrachte zweite Decklage nach einem vierten Verfahrensschritt;
- **Fig. 5**: eine erste Ausführungsform eines Inlays in einer Schnittansicht nach einem fünften Verfahrensschritt;
- **Fig. 6**: eine Karte in einer Schnittansicht nach einem sechsten Verfahrensschritt;
- **Fig. 7**: eine zweite Ausführungsform eines Inlays in einer Schnittansicht;
- **Fig. 8**: eine Draufsicht auf einen Nutzenbogen im Schnitt entlang einer Linie VIII-VIII aus **Fig. 2a****;**
- **Fig. 9a** und **9b**: eine erste und eine zweite Ausführungsform einer Karte mit einem Anzeigeelement in einer Schnittansicht.

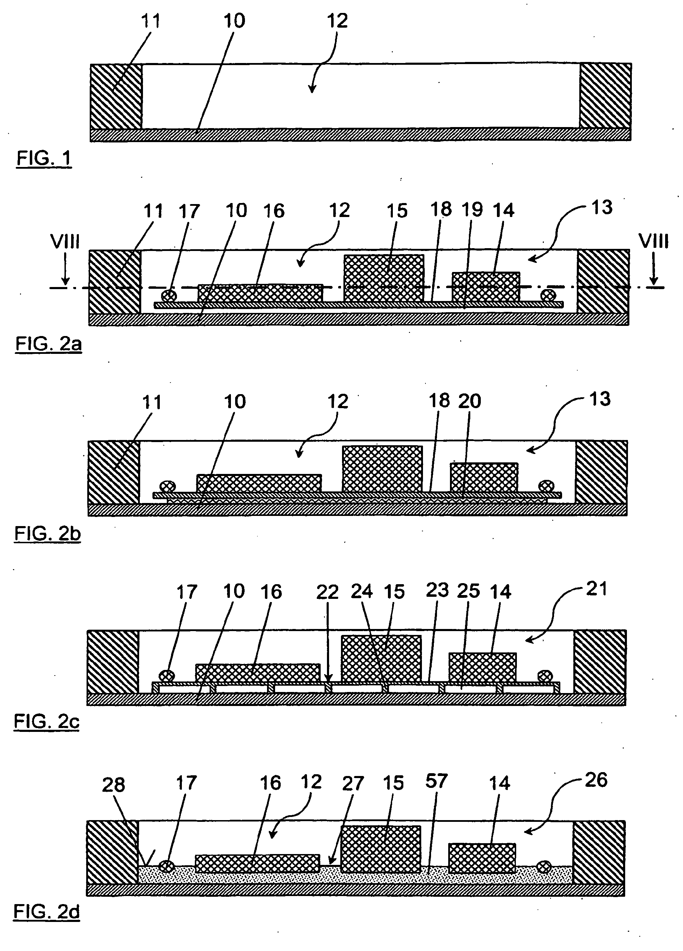

Eine Ausführungsform eines Verfahrens zur Herstellung eines Inlays ist in den **Fig. 1** bis **5** in einer Abfolge von Verfahrensschritten jeweils in einer Schnittansicht dargestellt. So zeigt **Fig. 1** eine erste Decklage 10 und eine darauf aufgebrachte Abstandslage 11 mit einer Durchgangsöffnung 12. Die Abstandslage 11 wird auf die erste Decklage 10 aufgelegt und mit der ersten Decklage 10 vermittels einer nicht näher dargestellten Kleberverbindung fest verbunden. Nachfolgend wird in der Durchgangsöffnung 12 eine Bauelementanordnung angeordnet.

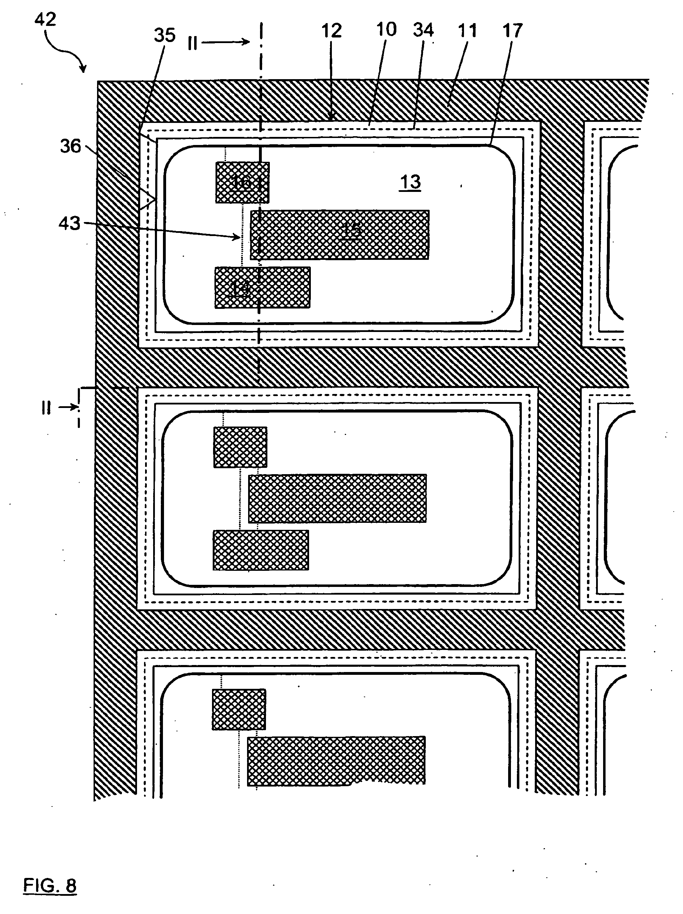

**Fig. 2a** bis **2d** zeigen verschiedene Ausführungsformen einer Anordnung einer Bauelementanordnung in einer Schnittansicht entlang einer Linie II-II aus **Fig. 8****.** Eine in **Fig. 2a** dargestellte Bauelementanordnung 13 weist elektronische Bauelemente 14, 15, 16 und eine Antennenwicklung als Bauelement 17 auf. Die Bauelemente 14, 15, 16, 17 sind auf einem Trägersubstrat 18 angeordnet und mit diesem fest verbunden. Die so gebildete Bauelementanordnung 13 wird, wie in **Fig. 2a** gezeigt, in die Durchgangsöffnung 12 eingesetzt, wobei keines der Bauelemente 14, 15, 16, 17 die Abstandslage 11 überragt. Zwischen dem Trägersubstrat 18 und der ersten Decklage 10 wird in der hier dargestellten Ausführungsform keine feste Verbindung ausgebildet, so dass sich zwischen dem Trägersubstrat 18 und der ersten Decklage 10 ein relativ dünner Spalt 19 ausbilden kann.

**Fig. 2b** zeigt eine zweite Ausführungsform einer Anordnung der Bauelementanordnung 13 in der Durchgangsöffnung 12. Zwischenliegend der ersten Decklage 10 und dem Trägersubstrat 18 ist eine Fixierschicht als Klebermaterialschicht 20 ausgebildet. Die Klebermaterialschicht 20 kann, wie hier nicht näher dargestellt, vor Anordnung der Bauelementanordnung 13 auf der ersten Decklage 10 als Kleberfolie oder flüssiges Klebermaterial auf dem Trägersubstrat 18 oder der ersten Decklage 10 aufgebracht werden. Die Klebermaterialschicht 20 sichert die Relativposition der Bauelementanordnung 13 in der Durchgangsöffnung 12 bzw. auf der ersten Decklage 10, so dass ein Verrutschen der Bauelementanordnung 13 bzw. aller Bauelemente 14, 15, 16, 17 bei den nachfolgenden Verfahrensschritten vermieden wird.

**Fig. 2c** zeigt eine Bauelementanordnung 21, die sich von der Bauelementanordnung 13 durch ein Trägersubstrat 22 unterscheidet. Das Trägersubstrat 22 ist aus einem plattenförmigen Träger 23 zur Aufnahme der Bauelemente 14, 15, 16, 17 und Stegen 24 ausgebildet. So gelangen lediglich die Stege 24 mit der ersten Decklage 10 zur Anlage, und zwischen den Stegen 24, dem Träger 23 und der ersten Decklage 10 werden Zwischenräume 25 ausgebildet. Die Zwischenräume 25 können bei einem nachfolgenden Verguss mit Füllmaterial vom Füllmaterial gut ausgefüllt werden, so dass eine Ausbildung von Lufteinschlüssen unterhalb des Trägersubstrat 22 weitestgehend vermieden wird.

Eine Bauelementanordnung 26 mit Bauelementen 14, 15, 16, 17, die auf einem Trägersubstrat 27 angeordnet sind, zeigt **Fig. 2d****.** Hier wird zunächst eine definierte Menge Füllmaterial 57 in die Durchgangsöffnung 12 eingebracht. Nachfolgend werden die Bauelemente 14, 15, 16, 17 auf der Oberfläche 28 des Füllmaterials 57 in einer definierten Relativposition angeordnet, wobei wie dargestellt die Bauelemente 14, 15, 16, 17 in die Oberfläche 28 des Füllmaterials 57 aufgrund einer ausgeübten leichten Druckkraft eindringen können. Vor Einbringen einer weiteren Gabe von Füllmaterial in die Durchgangsöffnung 12 erfolgt eine Verfestigung des Füllmaterials 57 zu dem Trägersubstrat 27. In hier nicht dargestellten Ausführungsformen kann das Füllmaterial 57 auch vor Anordnung der Bauelemente 14, 15, 16, 17 vollständig oder teilweise zu dem Trägersubstrat 27 verfestigt werden.

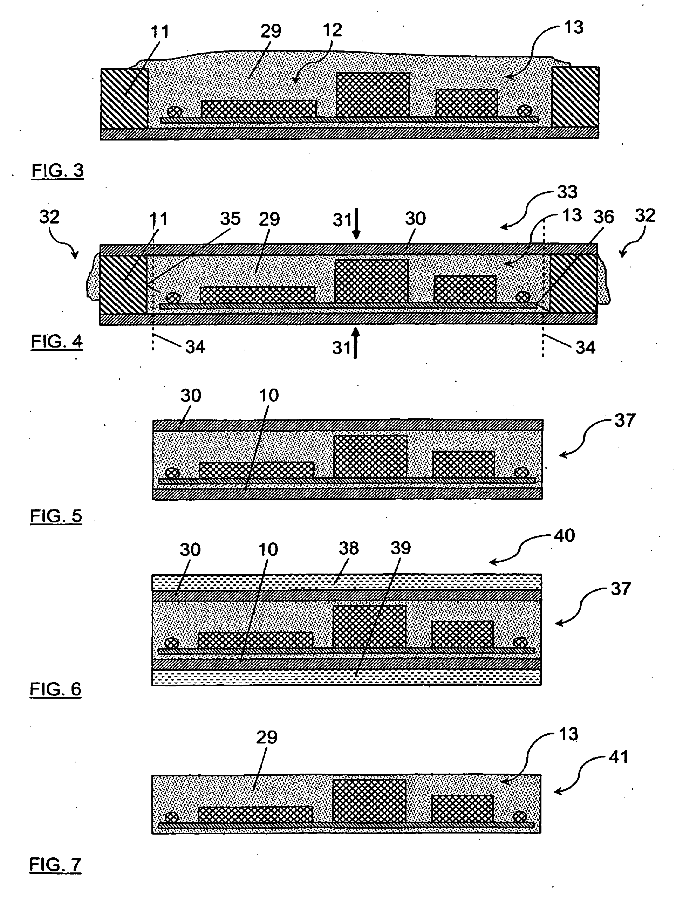

Nachfolgend der Anordnung der Bauelementanordnung 13 in der Durchgangsöffnung 12 wird, wie in **Fig. 3** gezeigt, die Durchgangsöffnung 12 mit Füllmaterial 29, die Bauelementanordnung 13 im Wesentlichen umgebend, ausgefüllt. Die Menge Füllmaterial 29 ist dabei so bemessen, dass die Durchgangsöffnung 12 bzw. die Abstandslage 11 geringfügig von Füllmaterial 29 überragt wird.

In nachfolgenden, in **Fig. 4** angedeuteten Arbeitsschritten, wird eine zweite Decklage 30 auf die Abstandslage 11 und das Füllmaterial 29 aufgebracht. Auf die erste Decklage 10 und die zweite Decklage 30 wird weiter eine durch die Pfeile 31 angedeutete, flächig wirkende Druckkraft ausgeübt, so dass überschüssiges Füllmaterial 29 zwischen der Abstandslage 11 und der zweiten Decklage 30 in Randbereichen 32 der Lagen austritt. In einer hier nicht näher dargestellten Ausführungsform des Verfahrens kann die zweite Decklage 30 ausgehend von einer Außenkante unter einem Winkel auf die Abstandslage 11 aufgebracht werden, so dass ein Austreten von Füllmaterial 29 erleichtert wird. Ist die erste und zweite Decklage 10 bzw. 30 fest mit der Abstandslage 11 zur Anlage gebracht, wird das Füllmaterial 29 durch eine Temperaturbeaufschlagung verfestigt und ein Halbzeug 33 ausgebildet. Aus dem Halbzeug 33 wird nun entlang einer umlaufenden Trennlinie 34, welche zwischen einer Innenkontur 35 der Durchgangsöffnung 12 und einer Außenkontur 36 der Bauelementanordnung 13 liegt, ein in **Fig. 5** gezeigtes Inlay 37 herausgetrennt.

Das Inlay 37 wird weiter mit Außenlagen 38, 39 zu der in **Fig. 6** dargestellten Karte 40 weiterverarbeitet. Die Außenlagen 38, 39 werden vorzugsweise vermittels einer Kleberverbindung, die hier nicht näher dargestellt ist, mit den Decklagen 10 bzw. 30 des Inlays 37 fest verbunden. Das verwendete Klebermaterial ist vorzugsweise bei einer relativ niedrigen Temperatur aktivier- bzw. aushärtbar.

Eine weitere Ausführungsform eines Inlays 41 zeigt **Fig. 7****,** wobei das Inlay 41 lediglich aus der Bauelementanordnung 13 und dem verfestigten Füllmaterial 29 gebildet ist. Nach oder vor Heraustrennen des Inlays 41 aus einer Lagenanordnung wurden die hier nicht mehr sichtbaren Decklagen von dem verfestigten Füllmaterial 29 entfernt.

**Fig. 8** zeigt eine Draufsicht im Schnitt entlang einer Linie VIII-VIII aus **Fig. 2a** mit einem Teilausschnitt eines Nutzenbogens 42. Der Nutzenbogen 42 ist aus der ersten Decklage 10 und der Abstandslage 11 mit einer Mehrzahl von Durchgangsöffnungen 12 ausgebildet. In jeweils eine Durchgangsöffnung 12 ist die Bauelementanordnung 13 mit den in **Fig. 2a** dargestellten Bauelementen 14, 15, 16, 17 eingesetzt. Die Bauelemente 14, 15, 16, 17 sind mit Verbindungsleitern 43, die hier als gestrichelte Linie angedeutet sind, miteinander verbunden. Die Trennlinie 34 verläuft, wie bereits zu **Fig. 4** ausgeführt, zwischen der Innenkontur 35 der Abstandslage 11 und der Außenkontur 36 der Bauelementanordnung 13.

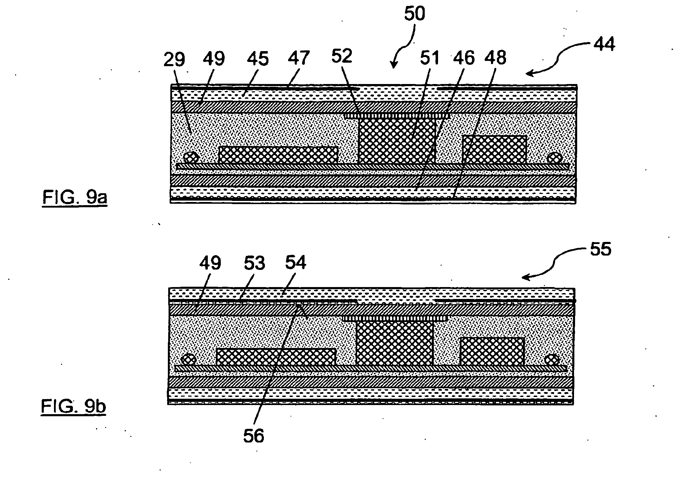

Eine Karte 44 mit bedruckten Außenlagen 45 und 46 zeigt **Fig. 9a****.** Die Außenlagen 45 und 46 sind jeweils außenseitig mit einer hier schematisch angedeuteten Bedruckung 47 bzw. 48 versehen. Sowohl die Außenlage 45 als auch eine zweite Decklage 49 sind optisch transparent und in der Außenlage 45 ist ein Sichtbereich 50 vorgesehen, in dem keine Bedruckung 47 aufgebracht ist. Zwischen einem als Anzeigeelement 51 ausgebildeten Bauelement und der zweiten Decklage 49 ist eine optische Übertragungsschicht 52 angeordnet. Die optische Übertragungsschicht 52 ist aus einem niedrig viskosen Klebermaterial gebildet, welches auf das Anzeigeelement 51 appliziert wird, bevor die zweite Decklage 49 auf eine hier nicht dargestellte Abstandslage und das Füllmaterial 29 aufgebracht wird. Die Übertragungsschicht 52 gewährleistet so eine gute optische Übertragung einer vom Anzeigeelement 51 dargestellten Sichtinformation durch die Lagen 49 und 45 hindurch, wobei das Anzeigeelement 51 nicht unmittelbar mit der zweiten Decklage 49 zur Anlage gelangt und so eventuelle Parallelitätsabweichungen zwischen dem Anzeigeelement 51 und der zweiten Decklage 49 durch die Übertragungsschicht 52 ausgeglichen werden.

Ebenso gut ist eine Bedruckung 53 auf eine zweite Außenlage 54 vor Verbindung der zweiten Außenlage 54 mit der zweiten Decklage 49 möglich. Wie in **Fig. 9b** dargestellt, ist dann eine Karte 55 ausbildbar, bei der die Bedruckung 53 auf einer Innenseite 56 der zweiten Außenlage 54 aufgebracht ist.

## Patentansprüche

1. Verfahren zur Herstellung eines Inlays (37, 41), insbesondere für Chipkarten, Wertkarten, Identifikationsdokumente oder dergleichen, mit zumindest zwei elektronischen Bauelementen (14, 15, 16, 17), wobei alle elektronischen Bauelemente in einer Relativanordnung auf einem Trägersubstrat (18, 22, 27) zur Ausbildung einer Bauelementanordnung (13, 21, 26) angeordnet werden, und wobei die Bauelementanordnung auf einer ersten Decklage (10) angeordnet wird und nachfolgend eine Abstandslage (11) mit einer Durchgangsöffnung (12) auf der ersten Decklage aufgebracht wird, wobei die Bauelementanordnung von der Durchgangsöffnung aufgenommen wird, ein die Durchgangsöffnung zumindest ausfüllendes Füllmaterial (29) in diese eingebracht wird, eine zweite Decklage (30, 49) auf die Abstandslage aufgebracht wird und das Füllmaterial unter Ausbildung einer Druckkraft auf die Decklagen verfestigt wird.

2. Verfahren zur Herstellung eines Inlays (37, 41), insbesondere für Chipkarten, Wertkarten, Identifikationsdokumente oder dergleichen, mit zumindest zwei elektronischen Bauelementen (14, 15, 16, 17), wobei alle elektronischen Bauelemente in einer Relativanordnung auf einem Trägersubstrat (18, 22, 27) zur Ausbildung einer Bauelementanordnung (13, 21, 26) angeordnet werden, und wobei auf einer ersten Decklage (10) eine Abstandslage (11) mit einer Durchgangsöffnung (12) aufgebracht wird und nachfolgend die Bauelementanordnung auf der ersten Decklage angeordnet wird, wobei die Bauelementanordnung von der Durchgangsöffnung aufgenommen wird, ein die Durchgangsöffnung zumindest ausfüllendes Füllmaterial (29) in diese eingebracht wird, eine zweite Decklage (30, 49) auf die Abstandslage aufgebracht wird und das Füllmaterial unter Ausbildung einer Druckkraft auf die Decklagen verfestigt wird.

3. Verfahren nach Anspruch 1 oder 2,
**dadurch gekennzeichnet,**
**dass** zur Ausbildung der Bauelementanordnung (26) auf der ersten Decklage (10) eine erste Menge Füllmaterial (57) in die Durchgangsöffnung (12) eingebracht wird, die elektronischen Bauelemente (14, 15, 16, 17) in einer Relativanordnung im Füllmaterial angeordnet werden und das Füllmaterial zu einem Trägersubstrat (27) verfestigt wird.

4. Verfahren nach einem der vorangehenden Ansprüche,
**dadurch gekennzeichnet,**
**dass** die Verfestigung des Füllmaterials (29, 57) durch Temperaturbeaufschlagung erfolgt, wobei die Temperatur eine Bauelemente (14, 15, 16, 17) schädigende Temperatur nicht überschreitet.

5. Verfahren nach einem der vorangehenden Ansprüche,
**dadurch gekennzeichnet,**
**dass** die Bauelementanordnung (13, 21, 26) auf der ersten Decklage (10) fixiert wird.

6. Verfahren nach Anspruch 5,
**dadurch gekennzeichnet,**
**dass** die Fixierung der Bauelementanordnung (13, 21, 26) auf der ersten Decklage (10) vermittels einer Fixierschicht (20), die zwischen einer Unterseite der Bauelementanordnung und der ersten Decklage ausgebildet wird, erfolgt.

7. Verfahren nach Anspruch 5,
**dadurch gekennzeichnet,**
**dass** die Fixierung der Bauelementanordnung (13, 21, 26) auf der ersten Decklage (10) vermittels Ultraschall erfolgt.

8. Verfahren nach Anspruch 5,
**dadurch gekennzeichnet,**
**dass** die Fixierung der Bauelementanordnung (13, 21, 26) auf der ersten Decklage (10) vermittels eines thermischen Verfahrens erfolgt.

9. Verfahren nach einem der vorangehenden Ansprüche,
**dadurch gekennzeichnet,**
**dass** zumindest ein Bauelement als Anzeigeelement (51) ausgebildet ist und zwischen dem Anzeigeelement und der zweiten Decklage (49) eine optische Übertragungsschicht (52) angeordnet wird.

10. Verfahren nach einem der vorangehenden Ansprüche,
**dadurch gekennzeichnet,**
**dass** eine feste Verbindung der Decklagen (10, 30, 49) mit der Abstandslage (11) erfolgt.

11. Verfahren nach Anspruch 1 bis 10,
**dadurch gekennzeichnet,**
**dass** die erste und/oder die zweite Decklage (10; 30) vor oder nach einem Heraustrennen des Inlays (37, 41) aus einer die Decklagen und die Abstandslage aufweisenden Lagenanordnung von der Abstandslage (11) bzw. dem verfestigten Füllmaterial (29, 57) entfernt wird.

12. Verfahren nach einem der vorangehenden Ansprüche,
**dadurch gekennzeichnet,**
**dass** das Inlay aus der Lagenanordnung herausgetrennt wird, derart, dass eine Trennlinie (34) zwischen einer Innenkontur (35) der Durchgangsöffnung und einer Außenkontur (36) der Bauelementanordnung (13, 21) verläuft.

13. Halbzeug (33) zur Herstellung eines Inlays (37, 48), für insbesondere Chipkarten, Wertkarten, Identifikationsdokumente oder dergleichen,
mit zumindest zwei elektronischen Bauelementen (14, 15, 16, 17), wobei alle elektronischen Bauelemente in einer Relativanordnung auf einem Trägersubstrat (18, 22, 27) zur Ausbildung einer Bauelementanordnung (13, 21, 26) angeordnet sind, und die Bauelementanordnung von einer Durchgangsöffnung (12) einer Abstandslage (11) aufgenommen ist, und die Durchgangsöffnung mit einem verfestigten Füllmaterial (29, 57) ausgefüllt ist, wobei die Bauelementanordnung auf einer ersten Decklage (10) angeordnet ist,
**dadurch gekennzeichnet,**
**dass** auf der ersten Decklage (10) die Abstandslage (11) mit der Durchgangsöffnung (12) aufgebracht ist.

14. Halbzeug nach Anspruch 13,
**dadurch gekennzeichnet,**
**dass** eine Trennlinie (34) zwischen einer Innenkontur (35) der Durchgangsöffnung und einer Außenkontur (36) der Bauelementanordnung (13, 21) verläuft.

15. Halbzeug nach einem der Ansprüche 13 oder 14,
**dadurch gekennzeichnet,**
**dass** auf einer der ersten Decklage (10) zugewandten Kontaktseite des Trägersubstrats (22) eine Oberflächenstruktur (24) ausgebildet ist.

16. Halbzeug nach einem der Ansprüche 13 bis 15,
**dadurch gekennzeichnet,**
**dass** zumindest eine Decklage (10, 30, 49) optisch transparent ist.

17. Halbzeug nach einem der Ansprüche 13 bis 16,
**dadurch gekennzeichnet,**
**dass** das Halbzeug aus einem Nutzenbogen (42) gebildet ist, der zumindest jeweils eine weitere Bauelementanordnung (13, 21, 26), eine Durchgangsöffnung (12) und ein verfestigtes Füllmaterial (29, 57) aufweist.

18. Verfahren zur Herstellung einer Karte, insbesondere Chipkarte, Wertkarte, Identifikationsdokument oder dergleichen, mit einem Halbzeug (33) nach einem der Ansprüche 13 bis 17, wobei zumindest eine Außenlage (38, 39, 45, 46, 54) vor oder nach einem Heraustrennen einer Karte (40, 44, 55) bzw. eines Inlays (37, 41) aus einer Lagenanordnung mit dem Halbzeug bzw. dem Inlay vermittels einer Kleberverbindung verbunden wird,
**dadurch gekennzeichnet,**
**dass** die Karte bzw. das Inlay aus der Lageranordnung herausgetrennt wird, derart, dass eine Trennlinie (34) zwischen einer Innenkontur (35) einer Durchgangsöffnung (12) einer Abstandslage (11) und einer Außenkontur (36) einer in der Durchgangsöffnung angeordneten Bauelementanordnung (13, 21, 26) verläuft.

19. Verfahren nach Anspruch 18,
**dadurch gekennzeichnet,**
**dass** die erste und/oder die zweite Decklage (40, 44, 55) vor einem Aufbringen der Außenlage (38, 39, 45, 46, 54) von der Abstandslage (11) bzw. einem verfestigten Füllmaterial (29, 57) entfernt wird.

20. Verfahren nach einem der Ansprüche 18 oder 19,
**dadurch gekennzeichnet,**
**dass** eine Aktivierung der Kleberverbindung durch Temperaturbeaufschlagung erfolgt, wobei die Temperatur eine Bauelemente (14, 15, 16, 17) schädigende Temperatur nicht überschreitet.

21. Karte (40, 44, 55), insbesondere Chipkarte, Wertkarte, Identifikationsdokument oder dergleichen, umfassend ein Halbzeug nach einem der Ansprüche 13 bis 17,
**dadurch gekennzeichnet,**
**dass** auf einer das Halbzeug (33) umfassenden Lagenanordnung zumindest eine bedruckbare Außenlage (45, 46, 54) aufgebracht ist.

22. Karte nach Anspruch 21,
**dadurch gekennzeichnet,**
**dass** die Außenlage (45, 54) zumindest in einem Teilbereich (50) optisch transparent ist.

23. Karte nach Anspruch 22,
**dadurch gekennzeichnet,**
**dass** die Außenlage (54) auf einer dem Füllmaterial (29, 57) zugewandten Seite (56) bedruckt ist.

## Claims

1. A method for producing an inlay (37, 41), in particular for chip cards, stored value cards, identification documents, or the like, having at least two electronic components (14, 15, 16, 17), wherein all electronic components are arranged in a relative configuration on a carrier substrate (18, 22, 27) to implement a component configuration (13, 21, 26), and the component configuration is arranged on a first cover layer (10) and then a spacer layer (11) having a through opening (12) is applied to the first cover layer, the component configuration being accommodated by the through opening, a filler material (29) which at least fills up the through opening being introduced therein, a second cover layer (30, 49) being applied to the spacer layer, and the filler material being solidified while implementing a pressure force on the cover layers.

2. A method for producing an inlay (37, 41), in particular for chip cards, stored value cards, identification documents, or the like, having at least two electronic components (14, 15, 16, 17), wherein all electronic components are arranged in a relative configuration on a carrier substrate (18, 22, 27) to implement a component configuration (13, 21, 26), and a spacer layer (11) having a through opening (12) is applied to a first cover layer (10) and the component configuration is then arranged on the first cover layer, the component configuration being accommodated by the through opening, a filler material (29) which at least fills up the through opening being introduced therein, a second cover layer (30, 49) being applied to the spacer layer, and the filler material being solidified while implementing a pressure force on the cover layers.

3. The method according to Claim 1 or 2,
**characterized in that**,
to implement the component configuration (26) on the first cover layer (10), a first quantity of filler material (57) is introduced into the through opening (12), the electronic components (14, 15, 16, 17) are arranged in a relative configuration in the filler material, and the filler material is solidified to form a carrier substrate (27).

4. The method according to one of the preceding claims,
**characterized in that**
the solidification of the filler material (29, 57) is performed by temperature impingement, the temperature not exceeding a temperature which damages components (14, 15, 16, 17).

5. The method according to one of the preceding claims,
**characterized in that**
the component configuration (13, 21, 26) is fixed on the first cover layer (10).

6. The method according to Claim 5,
**characterized in that**
the fixing of the component configuration (13, 21, 26) on the first cover layer (10) is performed using a fixing layer (20) which is implemented between a bottom side of the component configuration and the first cover layer.

7. The method according to Claim 5,
**characterized in that**
the fixing of the component configuration (13, 21, 26) on the first cover layer (10) is performed using ultrasound.

8. The method according to Claim 5,
**characterized in that**
the fixing of the component configuration (13, 21, 26) on the first cover layer (10) is performed using a thermal method.

9. The method according to one of the preceding claims,
**characterized in that**
at least one component is implemented as a display element (51) and an optical transmission layer (52) is arranged between the display element and the second cover layer (49).

10. The method according to one of the preceding claims,
**characterized in that**
the cover layers (10, 30, 49) are permanently bonded to the spacer layer (11).

11. The method according to Claims 1 through 10,
**characterized in that**
the first and/or second cover layer (10; 30) is/are removed from the spacer layer (11) and/or the solidified filler material (29, 57) before or after the inlay (37, 41) is isolated from a layer configuration having the cover layers and the spacer layer.

12. The method according to one of the preceding claims,
**characterized in that**
the inlay is isolated from the layer configuration in such a manner that a partition line (34) runs between an internal contour (35) of the through opening and an external contour (36) of the component configuration (13, 21).

13. A semi-finished product (33) for producing an inlay (37, 48), in particular for chip cards, stored value cards, identification documents, or the like, having at least two electronic components (14, 15, 16, 17), wherein all electronic components are arranged in a relative configuration on a carrier substrate (18, 22, 27) to implement a component configuration (13, 21, 26), and the component configuration is accommodated by a through opening (12) of a spacer layer (11), and the through opening is filled up by a solidified filler material (29, 57), the component configuration being arranged on a first cover layer (10),
**characterized in that**
the spacer layer (11) having the through opening (12) is applied to the first cover layer (10).

14. The semi-finished product according to Claim 13,
**characterized in that**
a partition line (34) runs between an internal contour (35) of the through opening and an external contour (36) of the component configuration (13, 21).

15. The semi-finished product according to one of Claims 13 or 14,
**characterized in that**
a surface structure (24) is implemented on a contact side of the carrier substrate (22) facing toward the first cover layer (10).

16. The semi-finished product according to one of Claims 13 through 15,
**characterized in that**
at least one cover layer (10, 30, 49) is optically transparent.

17. The semi-finished product according to one of Claims 13 to 16, **characterized in that**
the semi-finished product is formed from a panel sheet (42), which has at least one further component configuration (13, 21, 26), one through opening (12), and one solidified filler material (29, 57).

18. A method for producing a card, in particular a chip card, stored value card, identification document, or the like, using a semi-finished product (33) according to one of Claims 13 through 17, at least one external layer (38, 39, 45, 46, 54) being bonded to the semi-finished product and/or the inlay using an adhesive bond before or after a card (40, 44, 45) and/or an inlay (37, 41) is/are isolated from a layer configuration,
**characterized in that**
the card and/or the inlay is/are isolated from the layer configuration in such a manner that a partition line (34) runs between an internal contour (35) of a through opening (12) of a spacer layer (11) and an external contour (36) of a component configuration (13, 21, 26) arranged in the through opening.

19. The method according to Claim 18,
**characterized in that**
the first and/or the second cover layer (40, 44, 45) is/are removed from the spacer layer (11) and/or a solidified filler material (29, 57) before the external layer (38, 39, 45, 46, 54) is applied.

20. The method according to one of Claims 18 or 19,
**characterized in that**
the adhesive bond is activated by temperature impingement, the temperature not exceeding a temperature which damages components (14, 15, 16, 17).

21. A card (40, 44, 45), in particular a chip card, stored value card, identification document, or the like, comprising a semi-finished product according to one of Claims 13 through 17,
**characterized in that**
at least one printable external layer (45, 46, 54) is applied to a layer configuration comprising the semi-finished product (33).

22. The card according to Claim 21,
**characterized in that**
the external layer (45, 54) is optically transparent at least in a partial area (50).

23. The card according to Claim 22,
**characterized in that**
the external layer (54) is printed on a side (56) facing toward the filler material (29, 57).

## Revendications

1. Procédé de fabrication d'un insert (37, 41), en particulier pour des cartes à puce, des cartes prépayées, des documents d'identification ou quelque chose de similaire, comprenant au moins deux composants électroniques (14, 15, 16, 17), dans lequel tous les composants électroniques sont agencés dans une configuration relative sur un substrat porteur (18, 22, 27) afin de former une configuration de composants (13, 21, 26), la configuration de composants est agencée sur une première couche de recouvrement (10), et ensuite une couche d'écartement (11) ayant un orifice de passage (12) est appliquée sur la première couche de recouvrement, la configuration de composants est logée dans l'orifice de passage, un matériau de remplissage (29) au moins remplissant l'orifice de passage est introduit dans celle-ci, une seconde couche de recouvrement (30, 49) est appliquée sur la couche d'écartement, et le matériau de remplissage est solidifié tout en exerçant une force de pression sur les couches de recouvrement.

2. Procédé de fabrication d'un insert (37, 41), en particulier pour des cartes à puce, des cartes prépayées, des documents d'identification ou quelque chose de similaire, comprenant au moins deux composants électroniques (14, 15, 16, 17), dans lequel tous les composants électroniques sont agencés dans une configuration relative sur un substrat porteur (18, 22, 27) afin de former une configuration de composants (13, 21, 26), et dans lequel une couche d'écartement (11) ayant un orifice de passage est appliquée sur une première couche de recouvrement (10), et ensuite la configuration de composants est agencée sur la première couche de recouvrement, dans lequel la configuration de composants est logée dans l'orifice de passage, un matériau de remplissage (29) au moins remplissant l'orifice de passage est introduit dans celle-ci, une seconde couche de recouvrement (30, 49) est appliquée sur la couche d'écartement, et le matériau de remplissage est solidifié tout en exerçant une force de pression sur les couches de recouvrement.

3. Procédé selon la revendication 1 ou 2,
**caractérisé en ce qu'**
afin de former la configuration de composants (26) sur la première couche de recouvrement (10) une première quantité de matériau de remplissage (57) est introduite dans l'orifice de passage (12), les composants électroniques (14, 15, 16, 17) sont agencés dans une configuration relative dans le matériau de remplissage, et le matériau de remplissage est solidifié pour former un substrat porteur (27).

4. Procédé selon l'une quelconque des revendications précédentes, **caractérisé en ce que**
la solidification du matériau de remplissage (29, 57) est effectuée à l'aide de l'application d'une température, ladite température ne dépassant pas une température qui pourrait endommager les composants (14, 15, 16, 17).

5. Procédé selon l'une quelconque des revendications précédentes, **caractérisé en ce que**
la configuration de composants (13, 21, 26) est fixée sur la première couche de recouvrement (10).

6. Procédé selon la revendication 5,
**caractérisé en ce que**
la fixation de la configuration de composants (13, 21, 26) sur la première couche de recouvrement (10) est effectuée à l'aide d'une couche de fixation (20) qui est réalisée entre un côté inférieur de la configuration de composants et la première couche de recouvrement.

7. Procédé selon la revendication 5,
**caractérisé en ce que**
la fixation de la configuration de composants (13, 21, 26) sur la première couche de recouvrement (10) est réalisée à l'aide d'ultrason.

8. Procédé selon la revendication 5,
**caractérisé en ce que**
la fixation de la configuration de composants (13, 21, 26) sur la première couche de recouvrement (10) est réalisée à l'aide d'un processus thermique.

9. Procédé selon l'une quelconque des revendications précédentes, **caractérisé en ce qu'**
au moins un composant est réalisé en tant qu'élément d'affichage (51), et une couche de transmission optique (52) est agencée entre l'élément d'affichage et la seconde couche de recouvrement (49).

10. Procédé selon l'une quelconque des revendications précédentes, **caractérisé en ce qu'**
une liaison permanente est réalisée entre les couches de recouvrement (10, 30, 49) et la couche d'écartement (11).

11. Procédé selon les revendications 1 à 10,
**caractérisé en ce que**
la première et/ou la seconde couche de recouvrement (10, 30) est/sont enlevée/s de la couche d'écartement (11) et/ou du matériau de remplissage (29, 57) solidifié avant ou suite à la séparation de l'insert (37, 41) d'une configuration de couches ayant les couches de recouvrement et la couche d'écartement.

12. Procédé selon l'une quelconque des revendications précédentes, **caractérisé en ce que**
l'insert est séparé de la configuration de couches de telle manière qu'une ligne de séparation (34) passe entre un contour intérieur (35) de l'orifice de passage et un contour extérieur (36) de la configuration de composants (13, 21).

13. Produit semi-fini (33) pour la fabrication d'un insert (37, 48), en particulier pour des cartes à puce, des cartes prépayées, des documents d'identification ou quelque chose de similaire, comprenant au moins deux composants électroniques (14, 15, 16, 17), dans lequel tous les composants électroniques sont agencés dans une configuration relative sur un substrat porteur (18, 22, 27) afin de former une configuration de composants (13, 21, 26), et la configuration de composants est logée dans un orifice de passage (12) d'une couche d'écartement (11), et l'orifice de passage est rempli avec un matériau de remplissage (29, 57) solidifié, dans lequel la configuration de composants est agencée sur une première couche de recouvrement (10),
**caractérisé en ce que**
la couche d'écartement (11) ayant l'orifice de passage (12) est appliquée sur la première couche de recouvrement (10).

14. Produit semi-fini selon la revendication 13,
**caractérisé en ce qu'**
une ligne de séparation (34) passe entre un contour intérieur (35) de l'orifice de passage et un contour extérieur (36) de la configuration de composants (13, 21).

15. Produit semi-fini selon l'une quelconque des revendications 13 ou 14,
**caractérisé en ce qu'**
une structure de surface (24) est réalisée sur un côté de contact du substrat porteur (22) qui est dirigé vers la première couche de recouvrement (10).

16. Produit semi-fini selon l'une quelconque des revendications 13 à 15, **caractérisé en ce qu'**
au moins une couche de recouvrement (10, 30, 49) est optiquement transparente.

17. Produit semi-fini selon l'une quelconque des revendications 13 à 16, **caractérisé en ce que**
le produit semi-fini est formé d'une feuille de panneaux (42) qui présente au moins une autre configuration de composants (13, 21, 26), un orifice de passage (12) et un matériau de remplissage (29, 57) solidifié.

18. Procédé de fabrication d'une carte, en particulier une carte à puce, une carte prépayée, un document d'identification ou quelque chose de similaire, comprenant un produit semi-fini (33) selon l'une quelconque des revendications 13 à 17, dans lequel au moins une couche extérieure (38, 39, 45, 46, 54) est reliée au produit semi-fini et/ou à l'insert à l'aide d'une connexion adhésive avant ou suite à la séparation d'une carte (40, 44, 45) et/ou d'un insert (37, 41) d'une configuration de couches,
**caractérisé en ce que**
la carte et/ou l'insert est/sont séparé(e)/s de la configuration de couches de telle manière qu'une ligne de séparation (34) passe entre un contour intérieur (35) d'un orifice de passage (12) d'une couche d'écartement (11) et un contour extérieur (36) d'une configuration de composants (13, 21, 26) agencée dans l'orifice de passage.

19. Procédé selon la revendication 18,
**caractérisé en ce que**
la première et/ou la seconde couche de recouvrement (40, 44, 45) est/sont enlevée/s de la couche d'écartement (11) et/ou d'un matériau de remplissage (29, 57) solidifié avant l'application de la couche extérieure (38, 39, 45, 46, 54).

20. Procédé selon l'une quelconque des revendications 8 ou 19, **caractérisé en ce qu'**
une activation de la connexion adhésive est effectuée à l'aide de l'application d'une température, dans lequel ladite température ne dépasse pas une température qui pourrait endommager les composants (14, 15, 16, 17).

21. Carte (40, 44, 45), en particulier une carte à puce, une carte prépayée, un document d'identification ou quelque chose de similaire, comprenant un produit semi-fini selon l'une quelconque des revendications 13 à 17,
**caractérisé en ce qu'**
au moins une couche extérieure (45, 46, 54) imprimable est appliquée sur une configuration de couches comprenant le produit semi-fini (33).

22. Carte selon la revendication 21,
**caractérisé en ce que**
la couche extérieure (45, 54) est optiquement transparente au moins dans une zone partielle (50).

23. Carte selon la revendication 22,
**caractérisé en ce que**
la couche extérieure (54) est imprimée sur un côté (56) dirigée vers le matériau de remplissage (29, 57).
